(19) Europäisches Patentamt
European Patent Office
Office européen des brevets

(11) **EP 4 760 361 A1**

(12) **EUROPEAN PATENT APPLICATION**
published in accordance with Art. 153(4) EPC

(43) Date of publication:
**17.06.2026 Bulletin 2026/25**

(21) Application number: **24851910.0**

(22) Date of filing: **08.08.2024**

(51) International Patent Classification (IPC):
*G02B 3/06* (2006.01)     *G02B 3/00* (2006.01)
*G02B 26/10* (2006.01)     *G02B 27/01* (2006.01)

(52) Cooperative Patent Classification (CPC):
**G02B 3/00; G02B 3/06; G02B 26/10; G02B 27/01**

(86) International application number:
**PCT/JP2024/028405**

(87) International publication number:
**WO 2025/033493 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.08.2023  JP 2023129021
31.07.2024  JP 2024124792**

(71) Applicant: **KEIWA Incorporated
Tokyo 103-0025 (JP)**

(72) Inventor: **MATSUDA, Shuichi
Tokyo 103-0025 (JP)**

(74) Representative: **Becker Kurig & Partner
Patentanwälte mbB
Bavariastraße 7
80336 München (DE)**

(54) **OPTICAL ELEMENT**

(57) Provided is an optical element (10) according to one embodiment of the present invention, including a first main surface (11a) and a second main surface (12a) opposed to each other, wherein the first main surface (11a) has a first lenticular lens (11), the second main surface (12a) has a second lenticular lens (12), a long axis direction (Y) of the first lenticular lens (11) is orthogonal to a long axis direction (X) of the second lenticular lens (12) or intersects therewith to further form a deviation angle within a range of ±70 degrees from the orthogonal direction, the first lenticular lens (11) has a curved surface shape with a conic constant kx of -2.4 or more and -0.6 or less, and the second lenticular lens (12) has a curved surface shape with a conic constant ky of -0.9 or more and -0.5 or less.

Fig. 1

## Description

Technical Field

The present invention relates to an optical element.

Background Art

In recent years, in moving objects such as automobiles, head-up display (hereinafter sometimes referred to as HUD) devices for projecting driving assistance information, such as navigation projected from an image display device, onto a windshield have been attracting attention. Head-up display devices mainly include an image display device, a diffuser on which an image projected from the image display device is formed as an intermediate image, and a magnifying glass which magnifies the intermediate image and guides it to a windshield. As the diffuser, a microlens array is widely used.

In order to realize low power consumption in head-up display devices, a laser projector that uses, as a light source of an image display device, laser light with low power consumption for the light source is sometimes used. As a head-up display device, for example, PTL 1 proposes an image forming device configured by a laser projector that uses laser light as a light source and projects a video formed by an array of a plurality of pixels, a microlens array in which a plurality of microlenses are arranged, an optical system correction element, and an optical system magnification element.

Citation List

Patent Literature

PTL 1: Japanese Patent Application Publication No. 2010-145745

Summary of Invention

Technical Problem

A microlens array can appropriately diffuse incident light, and its curved surface shape can be freely designed in accordance with required light distribution characteristics and optical characteristics of a material thereof. However, when laser light is used as a light source, there is also another problem that a spot diameter of the laser light is small and it is difficult to make luminance of emitted light uniform over a diffusion range. Also, on the other hand, when image quality improves and a pitch size of a microlens becomes smaller accordingly, there is a problem that mold manufacturing becomes complex, which is time-consuming and costly.

The present invention has been made in consideration of the above circumstances, and an object thereof is to provide an optical element in which luminance of emitted light is uniform over a diffusion range, and which is suitable for mass production.

Solution to Problem

The inventor of the present invention has found that, by using lenticular lenses on both incidence and emission sides of an optical element, arranging a long axis direction of the lenticular lens on the incidence side to be orthogonal to a long axis direction of the lenticular lens on the emission side, and controlling curved surface shapes of the respective lenticular lenses, a simple manufacturing process can be used to achieve uniform luminance across a diffusion range of emitted light, and thus has reached the present invention.

That is, the present invention provides an optical element having a first main surface and a second main surface opposed to each other, wherein the first main surface has a first lenticular lens, the second main surface has a second lenticular lens, a long axis direction of the first lenticular lens is orthogonal to a long axis direction of the second lenticular lens or intersects therewith to further form a deviation angle within a range of $\pm 70$ degrees from the orthogonal direction, a curved surface shape of the first lenticular lens is expressed by the following Formula (1), and

[Math. 1]

$$z = f(x) = \frac{c_x * x^2}{1 + \sqrt{1 - (1 + k_x)c_x^2 * x^2}} \quad \text{Formula (1)}$$

[In Formula (1), cx indicates a curvature [1/mm], and x indicates a distance [mm] from a central axis of the first lenticular lens in an x direction. kx indicates a conic constant, and is -2.4 or more and -0.6 or less.]
a curved surface shape of the second lenticular lens is expressed by the following Formula (2).
[Math. 2]

$$z = f(y) = \frac{c_y * y^2}{1 + \sqrt{1 - (1 + k_y) c_y^2 * y^2}} \quad \text{Formula (2)}$$

[In Formula (2), cy indicates a curvature [1/mm], and y indicates a distance [mm] from a central axis of the second lenticular lens in a y direction. ky indicates a conic constant, and is -0.9 or more and -0.5 or less.] Advantageous Effects of Invention

According to the optical element of the present invention, it is possible to provide an optical element in which luminance of emitted light is uniform over a diffusion range, and which is suitable for mass production.

Brief Description of Drawings

[Fig. 1] is a perspective view showing a portion of an optical element according to one embodiment (a first embodiment) of the present invention.
[Fig. 2] is a plan view showing a portion of the optical element according to one embodiment of the present invention.
[Fig. 3] shows (a) a plan view of a first main surface and (b) a cross-sectional view along line X-X of a portion of the optical element according to one embodiment of the present invention.
[Fig. 4] shows (a) a plan view of a second main surface and (b) a cross-sectional view along line Y-Y of a portion of the optical element according to one embodiment of the present invention.
[Fig. 5] is a schematic diagram showing an optical element according to one embodiment (a second embodiment) of the present invention.
[Fig. 6] is a schematic diagram showing a head-up display device using the optical element of the present invention.
[Fig. 7] is a photograph showing heat maps for Examples 1 to 5.
[Fig. 8] is a photograph showing heat maps for Examples 6 to 10.
[Fig. 9] is a photograph showing heat maps for Examples 11 to 15.
[Fig. 10] is a photograph showing heat maps for Examples 16 to 19.
[Fig. 11] is a photograph showing heat maps for Examples 20 to 23.
[Fig. 12] is a graph showing luminance with respect to a diffusion angle of emitted light of Example 1.
[Fig. 13] is a graph showing luminance with respect to a diffusion angle of emitted light of Example 11.
[Fig. 14] is a graph showing luminance with respect to a diffusion angle of emitted light of Example 19.
[Fig. 15] is a graph showing luminance with respect to a diffusion angle of emitted light of Example 20.
[Fig. 16] is a graph showing a luminance with respect to a diffusion angle of emitted light of Example 23.
[Fig. 17] is photographs showing heat maps for diffusers of Examples 24, 25, 27, and 28.
[Fig. 18] is a graph showing a distribution in radiation intensity (W/sr) of diffused light in the diffuser according to Example 25.
[Fig. 19] is a graph showing a distribution in radiation intensity (W/sr) of diffused light in the diffuser according to Example 28.
[Fig. 20] shows a graph obtained by plotting the results of angular intensity uniformity by angle range for each of Examples 24 to 31 and Comparative Examples 1 and 2.
[Fig. 21] shows heat maps of the diffuser of Example 28 (a deviation angle of 40 degrees with respect to the orthogonal direction) for each of angle ranges (1) to (3).
[Fig. 22] shows heat maps of the diffuser of Example 29 (a deviation angle of 50 degrees with respect to the orthogonal direction) for each of angle ranges (1) to (3).

Description of Embodiments

[Optical element (first embodiment)]

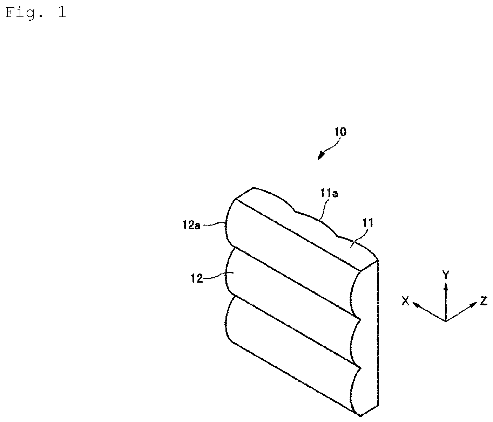

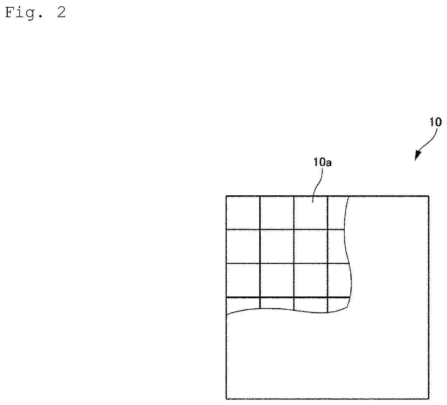

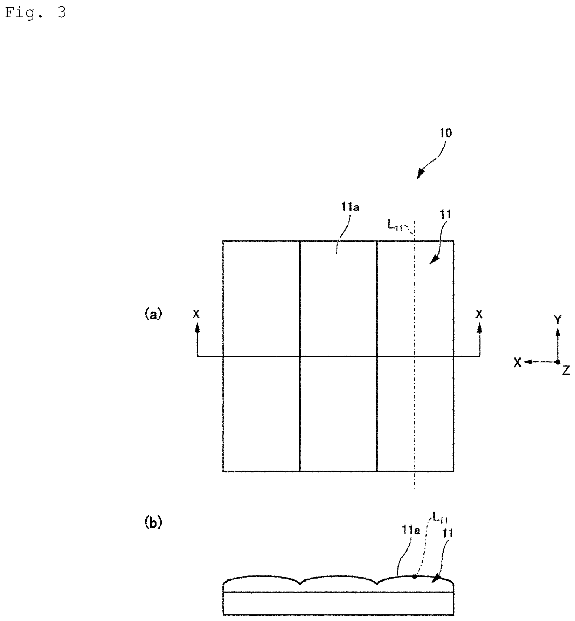

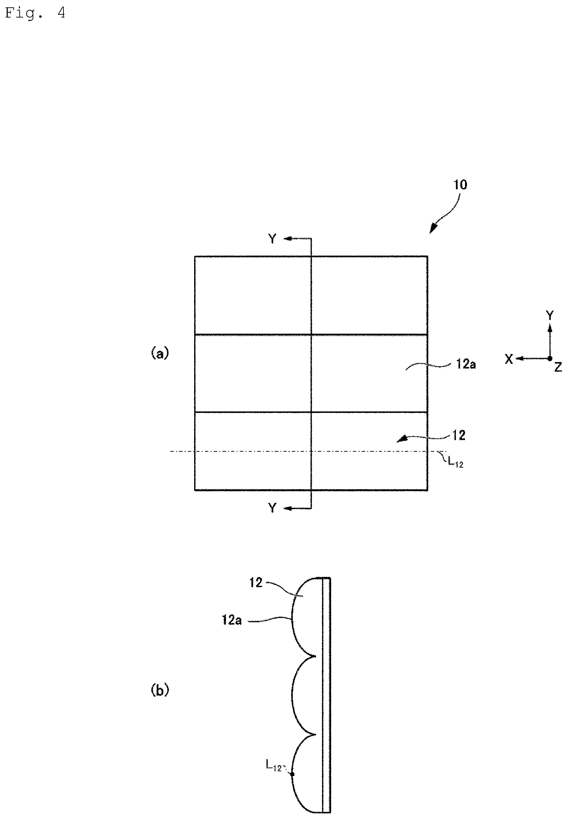

An optical element of one embodiment (a first embodiment) of the present invention will be described below with reference to the drawings. Fig. 1 is a perspective view showing a portion of the optical element according to the present embodiment. Fig. 2 is a plan view showing a portion of the optical element according to one embodiment of the present invention. Fig. 3 shows (a) a plan view of a first main surface and (b) a cross-sectional view along line X-X of a portion of the optical element according to the present embodiment. Fig. 4 shows (a) a plan view of a second main surface and (b) a cross-sectional view along line Y-Y of a portion of the optical element according to the present embodiment.

As shown in Fig. 1, the optical element of the present embodiment is an optical element 10 having a first main surface 11a and a second main surface 12a opposed to each other, where the first main surface 11a is on a light emission side, and the second main surface 12a is on a light incidence side. The first main surface 11a has a first lenticular lens 11, the second main surface 12a has a second lenticular lens 12, and a long axis direction (Y) of the first lenticular lens 11 is disposed to be orthogonal to a long axis direction (X) of the second lenticular lens 12.

As shown in Fig. 2, in the optical element 10 of the present embodiment, the long axis direction (Y) of the first lenticular lens 11 and the long axis direction (X) of the second lenticular lens 12 are disposed to be orthogonal to each other, and thus individual microlenses 10a are formed at locations at which the respective lenses intersect each other, thereby constituting an optical element 10 which includes a microlens array as a whole.

The first lenticular lens 11 and the second lenticular lens 12 will be described in detail below.

(First lenticular lens)

As shown in Fig. 3(a), the first lenticular lens 11 is formed by a plurality of lenticular lenses arranged in an X direction with a Y direction as the long axis direction. Fig. 3(b) is a cross-sectional view along line X-X in Fig. 3(a). A curved surface shape of the first lenticular lens 11 is expressed by the following Formula (1).

[Math. 3]

$$z = f(x) = \frac{c_x * x^2}{1 + \sqrt{1 - (1 + k_x)c_x^2 * x^2}} \quad \text{Formula (1)}$$

In Formula (1), cx indicates a curvature [1/mm], and x indicates a distance [mm] from a central axis $L_{11}$ of the first lenticular lens 11 in the X direction, that is, a distance on a surface extending in an X axis direction (that is, a direction orthogonal to the central axis $L_{11}$) of each of the plurality of lenticular lenses 11. kx indicates a conic constant and is -2.4 or more and -0.6 or less.

When the conic constant kx is -2.4 or more and -0.6 or less, it is possible to realize a luminance equal to or greater than 80% of the maximum luminance within an angle range of 90% of the full width at half maximum (FWHM) in a spectrum showing luminance characteristics with respect to a diffusion angle of emitted light. Also, the conic constant kx is preferably -2.0 or more and -1.0 or less, and when it is in this range, it is possible to realize a luminance equal to or greater than 90% of the maximum luminance within the angle range of 90% of the full width at half maximum (FWHM). Particularly, the conic constant kx is preferably -1.6. By reducing angular dependence of luminance, brightness in a displayed image seen from any viewpoint position can be perceived as more uniform.

In Formula (1), the distance x from the central axis of the first lenticular lens 11 in the X direction is preferably 0 or more and Px/2 or less. Also, Px indicates a pitch between lenses of the first lenticular lens 11, which will be described later. When the distance x is within the above range, no planar portion is formed on a lenticular lens-shaped surface of the first main surface of the optical element, and a significant increase in frontal luminance can be inhibited.

In the first lenticular lens 11, the pitch Px between lenses is preferably 5 μm or more, and more preferably 25 μm or more. By setting the pitch Px in this way, it is possible to prevent difficulty in controlling a viewing angle due to a diffraction phenomenon. In addition, it is possible to inhibit occurrence of interference fringes.

Also, the pitch Px between lenses is preferably 500 μm or less, and more preferably 250 μm or less. By setting the pitch Px in this way, it is possible to prevent pixels of an image of a head-up display from becoming coarse.

(Second lenticular lens)

As shown in Fig. 4(a), the second lenticular lens 12 is formed by a plurality of lenticular lenses disposed with the X direction as the long axis direction. Fig. 4(b) shows a cross-sectional view along line Y-Y in Fig. 4(a).

A curved surface shape of the second lenticular lens is expressed by the following Formula (2).

[Math. 4]

$$z = f(y) = \frac{c_y * y^2}{1 + \sqrt{1 - (1 + k_y)c_y^2 * y^2}} \quad \text{Formula (2)}$$

In Formula (2), cy indicates a curvature [1/mm], and y indicates a distance [mm] in the Y direction from a central axis $L_{12}$ of the second lenticular lens, that is, a distance on a surface extending in a Y axis direction (that is, a direction orthogonal to the central axis $L_{12}$) of each of the plurality of lenticular lenses 11. ky indicates a conic constant and is -0.9 or more and -0.5 or less.

When the conic constant ky is -0.9 or more and -0.5 or less, it is possible to realize a luminance equal to or greater than 80% of the maximum luminance within the angle range of 90% of the full width at half maximum (FWHM) in the spectrum showing the luminance characteristics with respect to the diffusion angle of the emitted light. Also, the conic constant ky is preferably -0.8 or more and -0.6 or less, and when it is in this range, it is possible to realize a luminance equal to or greater than 90% of the maximum luminance within the angle range of 90% of the full width at half maximum (FWHM). Particularly, the conic constant ky is preferably -0.7. By reducing angular dependence of luminance, brightness in a displayed image seen from any viewpoint position can be perceived as more uniform.

In Formula (2), the distance y from the central axis of the first lenticular lens 11 in the Y direction is preferably 0 mm or more and Py/2 or less. Also, Py indicates a pitch between lenses of the second lenticular lens 12, which will be described later. When the distance y is within the above range, no planar portion is formed on a lenticular lens-shaped surface of the first main surface of the optical element, and a significant increase in frontal luminance can be inhibited.

In the second lenticular lens 12, the pitch Py between lenses is preferably 5 $\mu$m or more, and more preferably 25 $\mu$m or more. By setting the pitch Py in this way, it is possible to prevent difficulty in controlling a viewing angle due to a diffraction phenomenon. Also, it is possible to inhibit occurrence of interference fringes.

The pitch Py between lenses is preferably 500 $\mu$m or less, and more preferably 250 $\mu$m or less. By setting the pitch Py in this way, it is possible to prevent pixels of an image of a head-up display from becoming coarse.

As a material for forming the lenticular lenses, a radiation setting resin or a thermoplastic resin can be used. A refractive index of the resin is preferably 1.35 or more and 1.7 or less, and more preferably 1.45 or more and 1.66 or less. By using the resin having such a refractive index, it is possible to appropriately control characteristics of light incident on or emitted from the optical element. Examples of the resin having such a refractive index include an acrylic resin, polycarbonate, polyethylene terephthalate, polyvinyl chloride, polystyrene, and the like.

According to the radiation setting resin or thermoplastic resin, by manufacturing a mold corresponding to the above shape and performing injection molding, heat press processing, or UV transfer molding, the optical element configured of the microlenses can be easily and reliably manufactured.

In the case of requiring a wider viewing angle and more uniform angular luminance, it is preferable that the curved surface shape of the first lenticular lens 11 be further adjusted in accordance with the following Formula (3).
[Math. 5]

$$\sum_{n=2}^{10} A_{2n}[(1 - B_{2n})x^2 + (1 + B_{2n})y^2]^n \quad \text{Formula (3)}$$

In Formula (3), A indicates a symmetric coefficient. B indicates an asymmetric coefficient and is -1.

By adjusting the curved surface shape of the first lenticular lens 11 in accordance with Formula (3), the luminance can be made uniform in a wide viewing angle.

In the case of requiring a wider viewing angle and more uniform angular luminance, it is preferable that the curved surface shape of the second lenticular lens 12 be further adjusted in accordance with the following Formula (4).
[Math. 6]

$$\sum_{n=2}^{10} A_{2n}[(1 - B_{2n})x^2 + (1 + B_{2n})y^2]^n \quad \text{Formula (4)}$$

In Formula (4), A indicates a symmetric coefficient. B indicates an asymmetric coefficient and is 1.

By adjusting the curved surface shape of the second lenticular lens 12 in accordance with Formula (4), the luminance can be made uniform in a wide viewing angle.

A diffusion shape of the optical element 10 of the present embodiment is rectangular and can maintain a high luminance equal to or greater than 90% of the maximum luminance of the emitted light within a range of the diffusion angle of the emitted light up to 40 degrees in a horizontal direction H and up to 28 degrees in a vertical direction V, and thus the luminance of the emitted light can be made uniform. Also, the optical element 10 of the present embodiment can maintain a high luminance equal to or greater than 98% of the maximum luminance of the emitted light within a range of the diffusion angle of the emitted light up to 25.5 degrees in the horizontal direction H and up to 19.5 degrees in the vertical direction V, and thus the luminance of emitted light can be made uniform. In addition, a light distribution pattern (an intensity distribution of the emitted light) in each direction can be formed in a top hat shape. Further, the optical element 10 of the present embodiment has been obtained by coming up with an optical configuration for making luminance uniform in a wide viewing angle with respect to shapes and positions (whether to be located on the incidence surface or emission surface) of lenticular lenses when a refractive index varies small, large, and small while incident light passes through an optical element from the air.

Also, the optical element 10 of the present embodiment realizes making the luminance at a diffusion angle uniform by providing the lenticular lenses on both sides of the opposing surfaces, and makes a machining process of a mold greatly simplified as compared to the case in which similar optical characteristics can be obtained by providing lenses on only one surface, and thus it is suitable for mass production.

[Optical element (second embodiment)]

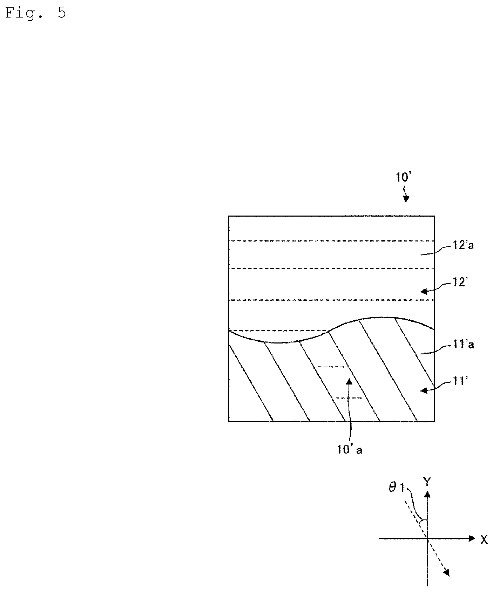

An optical element according to one embodiment (a second embodiment) of the present invention will be described below with reference to the drawings. Fig. 5 is a schematic diagram showing an optical element 10' according to the second embodiment.

As shown in Fig. 5, the optical element 10' of the present embodiment is a plate-shaped optical element and has a first main surface 11'a and a second main surface 12'a, which is a back surface of the first main surface 11'a, where the first main surface 11'a is a surface on a light emission side, and the second main surface 12'a is a surface on a light incidence side. The first main surface 11'a has a first lenticular lens 11', the second main surface 12'a has a second lenticular lens 12', and a long axis direction of the first lenticular lens 11' is disposed on an X-Y plane to form a deviation angle θ within a range of ±70 degrees from the direction orthogonal to the long axis direction of the second lenticular lens 12'. By providing the deviation angle θ between the first and second lenticular lenses in this way, in the first embodiment, a pitch direction of the first lenticular lenses 11', which is parallel to the X axis direction, is disposed to further form the deviation angle within the range of ±70 degrees on the X-Y plane with respect to a pitch direction of the second lenticular lenses 12', which is parallel to the Y axis direction.

The optical element 10' is disposed so that the long axis direction of the first lenticular lens 11' is disposed to further form the deviation angle θ within the range of ±70 degrees from the direction orthogonal to the long axis direction of the second lenticular lens 12', which is provided parallel to the X axis direction, and thus Individual microlenses 10'a are formed at locations at which the respective lenses intersect each other, thereby forming the optical element 10' configured of a microlens array as a whole. Here, the microlenses 10'a are formed so that the pitch direction of the first lenticular lens 11' and the pitch direction of the second lenticular lens 12' form a deviation angle θ.

The first lenticular lens 11' included in the optical element 10' is the same as the first lenticular lens 11 of the first embodiment, except that it is disposed to form the deviation angle θ. The second main surface 12'a included in the optical element 10', the second lenticular lens 12', and materials for forming the first and second lenticular lenses are the same as those of the first embodiment, and thus the description thereof will be omitted.

As shown in Fig. 5, it is sufficient that the first lenticular lens 11' is disposed on the X-Y plane to form a deviation angle θ with respect to the Y axis within the range of ±70 degrees, the deviation angle θ is more preferably within a range of ±40 degrees and most preferably within a range of ±10 degrees, and within these ranges, a smaller deviation angle θ can further increase uniformity of the luminance of the emitted light. The deviation angle θ of the first lenticular lens 11' can be adjusted depending on an angle range of the diffusion angle of the emitted light.

More specifically, by setting the deviation angle θ of each lenticular lens within the range of ±70 degrees, the optical element 10' can maintain a high luminance equal to or greater than 98% of the maximum luminance of the emitted light within a range of the diffusion angle of the emitted light including an absolute value range of 0 to 26 degrees in the horizontal direction H and 0 to 12 degrees in the vertical direction V, and thus the luminance of the emitted light can be made uniform. In addition, the light distribution pattern (intensity distribution of the emitted light) in each direction can be formed in a top hat shape. Also, although not limited thereto, the optical element 10' can be used by making the luminance of the emitted light uniform within a range of the diffusion angle of the emitted light including 0 to 13 degrees in the horizontal direction H and 0 to 12 degrees in the vertical direction V.

The curved surface shape of the first lenticular lens 11' is expressed by the above-mentioned Formula (1) in a cross-section perpendicular to the long axis direction of the first lenticular lens 11', and the conic constant ky is preferably -2.4 or more and -0.6 or less.

When the conic constant kx in the cross-section perpendicular to the long axis direction of the first lenticular lens 11', that is, a cross-section taken parallel to the pitch direction, is -2.4 or more and -0.6 or less, as in the first embodiment, it is possible to realize a luminance equal to or greater than 80% of the maximum luminance within an angle range of 90% of the full width at half maximum (FWHM) in a spectrum showing luminance characteristics relative to the diffusion angle of the emitted light. Also, as in the first embodiment, the conic constant kx is preferably -2.0 or more and -1.0 or less, and when it is in this range, it is possible to realize a luminance equal to or greater than 90% of the maximum luminance within the angle range of 90% of the full width at half maximum (FWHM). Particularly, the conic constant kx is preferably -1.6 as in the first embodiment, and thus, by reducing the angular dependence of luminance, the brightness in the displayed image seen from any viewpoint position can be perceived as more uniform.

Further, preferred ranges for the distance x from the central axis in the X direction and the pitch Px between the lenses, as defined by the above-mentioned Formula (1), are the same as those in the first embodiment, so thus the description thereof will be omitted.

In the case of requiring a wider viewing angle and more uniform angular luminance, it is preferable that the curved surface shape of the first lenticular lens 11' be adjusted in accordance with the above-mentioned Formula (3).

The angular intensity uniformity obtained from the maximum and minimum values of radiation intensity (W/sr) on the basis of the following formula can be set to 60% or more, and more preferably 80% or more.

Angular intensity uniformity=((minimum value of radiation intensity)/(maximum value of radiation intensity))×100%

Thus, the optical element 10' can make the luminance uniform over a wide viewing angle.

[Head-up display device]

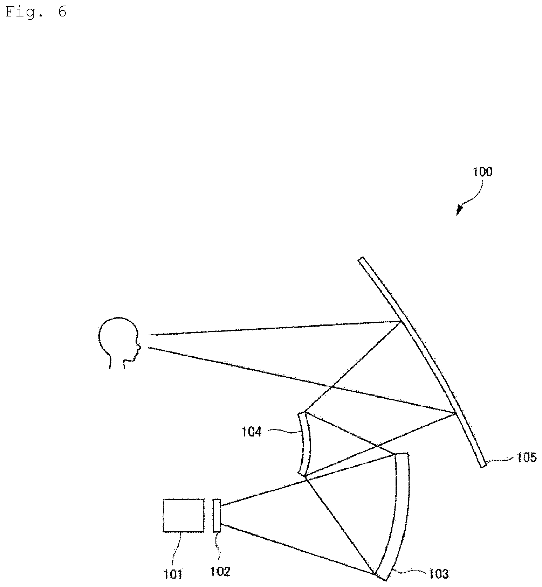

Next, one embodiment of a head-up display device using the optical element of the present invention will be described with reference to the drawings. Fig. 6 is a schematic diagram showing the head-up display device of the present embodiment.

The head-up display device according to the present embodiment is a vehicle head-up display device, and uses, as an image forming device, a laser projector that uses laser light as a light source. The laser projector can use a semiconductor laser with low power consumption as the light source, thereby realizing less power consumption for the entire head-up display device. In the present embodiment, the optical element of the present invention is used as a diffuser for diffusing an image or video emitted from the laser projector and projecting it onto a main mirror.

As shown in Fig. 6, the head-up display device 100 includes a laser projector 101 serving as an image forming device, a diffuser 102 disposed on a light emission side of the laser projector 101, a main mirror 103, a secondary mirror 104, and a transmissive reflector 105. In the vehicle head-up display device 100, the transmissive reflector 105 is a windshield.

An image projected by the laser projector 101 is incident as normal incident light on the second main surface (second lenticular lens 12) of the diffuser 102, and is formed as an intermediate image on the first main surface (first lenticular lens 11). A condenser lens or the like may be disposed between the laser projector 101 and the diffuser 102 to correct so that the incident angle of the laser light falls within an aperture angle of the microlens of the diffuser 102.

Also, when the optical element 10' is used as the diffuser 102, the optical element 10' may be disposed between the laser projector 101 and the main mirror 103 (concave mirror) while it is parallel to a plane perpendicular to the incident light so that the angle of the second main surface (second lenticular lens 12') is adjusted to an optimized angle. Setting of the optimized angle will be described in detail in the "examples" section.

A size or the like of the diffuser 102 may be designed depending on a size of the laser projector 101 as a light source of the head-up display device 100, its placement relative to the diffuser 102, and the like. That is, the size of the optical element of the present invention, and shapes of the respective lenticular lenses on the first and second main surfaces thereof and the microlenses formed by these lenticular lenses may be designed in consideration of the size of the light source and its placement relative to the light source.

The intermediate image formed by the diffuser 102 is magnified by the main mirror 103 (concave mirror), passes through the secondary mirror 104, is reflected by the transmissive reflector 105 (windshield), and is guided to a driver's eyes. The laser light emitted from the laser projector 101 is reflected by the transmissive reflector 105 and enters the driver's eyes, and in this case, the image displayed as the intermediate image is perceived by the driver as if it were in front of the transmissive reflector 105.

In the present embodiment, an optical correction system including the main mirror 103 and the secondary mirror 104 is used, but the present invention is not particularly limited to this form, and other optical correction systems can be used.

In the present embodiment, since the laser projector is used as the image forming device, a high-resolution image or video can be realized, and since the optical element using the microlens of the present invention is used as the diffuser, the luminance of emitted light is uniform within the diffusion range, and a higher-quality image or video with high luminance can be realized.

In view of the fact that the optical element according to the present invention enables a thinner head-up display device, it preferably has a thickness of 10 mm or less, and more preferably 5 mm or less. On the other hand, from the viewpoint of ensuring a strength of the optical element, the thickness of the optical element of the present invention is preferably 0.5 mm or more, and may be 1 mm or more. Also, the thickness of the optical element of the present invention is not limited, and the optical element may have a film or sheet shape having a thickness of 0.5 mm or less, and more preferably, 0.2 mm or less. By forming the optical element into a film or sheet shape, there is an advantage that a size of a device incorporating the optical element can be further reduced.

The optical element of the present invention is used as a diffuser, and can be more suitably used in a head-up display device in which a diffusion angle of light incident on a first main surface and emitted from a second main surface is set within the range of 0 to 26 degrees in the horizontal direction H and 0 to 12 degrees in the vertical direction V. Accordingly, a head-up display device including the optical element of the present invention also falls within the scope of the present invention.

[Summary]

An optical element according to Aspect 1 of the present invention is the optical element having the first main surface and the second main surface opposed to each other, wherein the first main surface has the first lenticular lens, the second main surface has the second lenticular lens, the long axis direction of the first lenticular lens is orthogonal to the long axis direction of the second lenticular lens, or intersects therewith to further form the deviation angle within the range of $\pm70$ degrees from the orthogonal direction, the curved surface shape of the first lenticular lens is expressed by the following Formula (1), and
[Math. 7]

$$z = f(x) = \frac{c_x * x^2}{1 + \sqrt{1 - (1 + k_x) c_x^2 * x^2}} \quad \text{Formula (1)}$$

[In Formula (1), cx indicates a curvature [1/mm], and x indicates a distance [mm] from the central axis of the first lenticular lens in the x direction. kx indicates a conic constant and is -2.4 or more and -0.6 or less.]
the curved surface shape of the second lenticular lens is expressed by the following Formula (2).
[Math. 8]

$$z = f(y) = \frac{c_y * y^2}{1 + \sqrt{1 - (1 + k_y) c_y^2 * y^2}} \quad \text{Formula (2)}$$

[In Formula (2), cy indicates a curvature [1/mm], and y indicates a distance [mm] from the central axis of the second lenticular lens in the y direction. ky indicates a conic constant and is -0.9 or more and -0.5 or less.]

An optical element according to Aspect 2 of the present invention may be such that kx is -2.0 or more and -1.0 or less in the above Aspect 1.

An optical element according to Aspect 3 of the present invention may be such that ky is -0.8 or more and -0.6 or less in the above Aspect 1 or 2.

An optical element according to Aspect 4 of the present invention may be made of a resin having a refractive index of 1.35 or more and 1.7 or less in any one of the above Aspects 1 to 3.

An optical element according to Aspect 5 of the present invention may have angular intensity uniformity of 60% or more in any one of the above Aspects 1 to 4.

An optical element according to Aspect 6 of the present invention may have a luminance equal to or greater than 80% of the maximum luminance within an angle range of 90% of the full width at half maximum (FWHM) in any one of the above Aspects 1 to 5.

An optical element according to Aspect 7 of the present invention may be a diffuser in any one of the above Aspects 1 to 6.

An optical element according to Aspect 8 of the present invention may be such that, in any one of the above Aspects 1 to 7, the curved surface shape of the first lenticular lens is further adjusted in accordance with the following Formula (3).
[Math. 9]

$$\sum_{n=2}^{10} A_{2n}[(1-B_{2n})x^2+(1+B_{2n})y^2]^n \quad \text{Formula (3)}$$

[In Formula (3), A indicates a symmetric coefficient. B indicates an asymmetric coefficient and is -1.]

An optical element according to Aspect 9 of the present invention may be such that, in any one of the above Aspects 1 to 8, the curved surface shape of the second lenticular lens is further adjusted in accordance with the following Formula (4).

[Math. 10]

$$\sum_{n=2}^{10} A_{2n}[(1-B_{2n})x^2+(1+B_{2n})y^2]^n \quad \text{Formula (4)}$$

[In Formula (4), A indicates a symmetric coefficient. B indicates an asymmetric coefficient and is 1.]

An optical element according to Aspect 10 of the present invention may be such that the diffuser is used in a head-up display device in any one of the above Aspects 1 to 9.

An optical element according to Aspect 11 of the present invention may be such that, in any one of the above Aspects 1 to 10, an image forming device in the head-up display device is a laser projector using laser light as a light source.

An optical element according to Aspect 12 of the present invention may be used, in any one of the above Aspects 1 to 11, within a range of the diffusion angle of light incident on the first main surface and emitted from the second main surface including 0 to 26 degrees in the horizontal direction H and 0 to 12 degrees in the vertical direction V.

Examples

The present invention will be described in more detail using examples.

[Examples 1 to 23]

(Microlens design)

As optical elements of examples, simulations were conducted using the following design specifications for diffusers including a microlens array having the first lenticular lens on the first main surface and the second lenticular lens on the second main surface opposed to each other.

<Design specifications>

- The refractive index of the diffuser was 1.49, the same as that of an acrylic resin.
- The diffusion shape of the emitted light was rectangular, the diffusion angle of the emitted light with respect to normal incident light was 26 degrees in the horizontal direction H and 12 degrees in the vertical direction V, and the light distribution pattern in each direction was a top hat shape.
- The curvature cx was 27 mm$^{-1}$, and the curvature cy was 60 mm$^{-1}$.
- The pitch Px of the first lenticular lenses in the X direction was set to $30\pm2$ $\mu$m.
- The pitch Py of the second lenticular lenses in the Y direction was set to $30\pm2$ $\mu$m.
- The conic constants kx and ky in the above Formulas (1) and (2) were as shown in Table 1.

[Table 1]

|  | Second lenticular lens (Incidence side) Conic constant ky | First lenticular lens (Emission side) Conic constant kx |
|---|---|---|
| Example 1 | -0.7 | -0.6 |
| Example 2 | -0.7 | -0.7 |
| Example 3 | -0.7 | -0.8 |

(continued)

|  | Second lenticular lens (Incidence side) Conic constant ky | First lenticular lens (Emission side) Conic constant kx |
|---|---|---|
| Example 4 | -0.7 | -0.9 |
| Example 5 | -0.7 | -1 |
| Example 6 | -0.7 | -1.1 |
| Example 7 | -0.7 | -1.2 |
| Example 8 | -0.7 | -1.3 |
| Example 9 | -0.7 | -1.4 |
| Example 10 | -0.7 | -1.5 |
| Example 11 | -0.7 | -1.6 |
| Example 12 | -0.7 | -1.7 |
| Example 13 | -0.7 | -1.8 |
| Example 14 | -0.7 | -1.9 |
| Example 15 | -0.7 | -2 |
| Example 16 | -0.7 | -2.1 |
| Example 17 | -0.7 | -2.2 |
| Example 18 | -0.7 | -2.3 |
| Example 19 | -0.7 | -2.4 |
| Example 20 | -0.5 | -1.6 |
| Example 21 | -0.6 | -1.6 |
| Example 22 | -0.8 | -1.6 |
| Example 23 | -0.9 | -1.6 |

[Light source and light receiver]

In Examples 1 to 23, conditions for a light source and a light receiver were as follows.

Light source size: 1 mm square

Light source position: -1 mm behind the seat (-Z direction)
Number of tracking rays: 10,000,000
Fixed light receiver size: 20 mm square
Fixed receiver position: 0.01 mm in front of the seat (Z direction)

(Luminance with respect to diffusion angle of emitted light)

In Examples 1 to 23, the luminance with respect to the diffusion angle of the emitted light was derived using geometrical optical simulation software LightTools (Synopsys, Inc.). The optical element was disposed on a plane parallel to the X axis and the Y axis, lenticular shapes were formed so that the pitch direction of the first lenticular shape on the light emission surface was the X direction and the pitch direction of the second lenticular shape on the light incidence surface was the Y direction, a light source which emits collimated light parallel to the Z axis from the light incidence surface of the optical element was set, and angular luminance distribution information was acquired for the light after passing through the optical element.
Geometrical optical simulation software LightTools (Synopsys, Inc.) used in the present examples is used for research and development in the field of optical materials including the field to which the present invention pertains, and is widely known simulation software. For example, in WO 2023/053643, such simulation results were compared with optical sheets molded on the basis of the simulation results, and thus the reliability of the simulation results was confirmed.

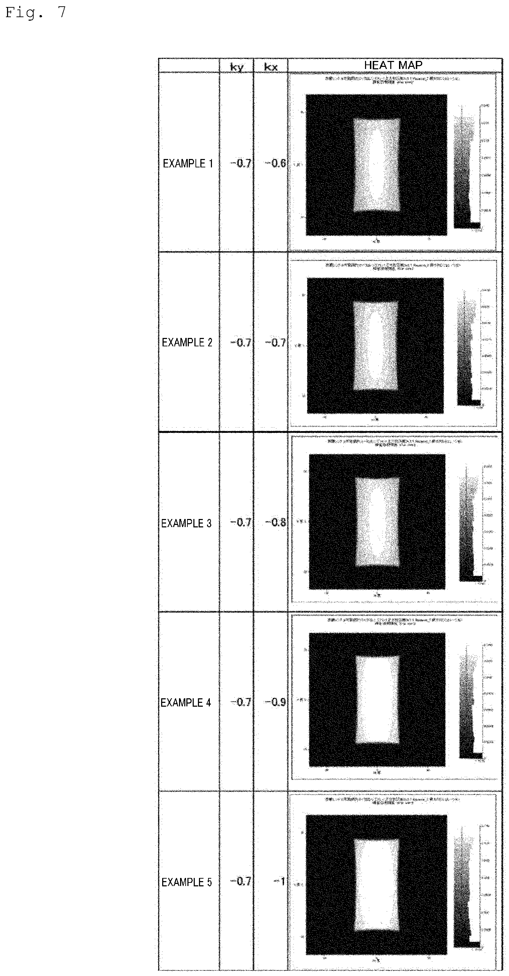

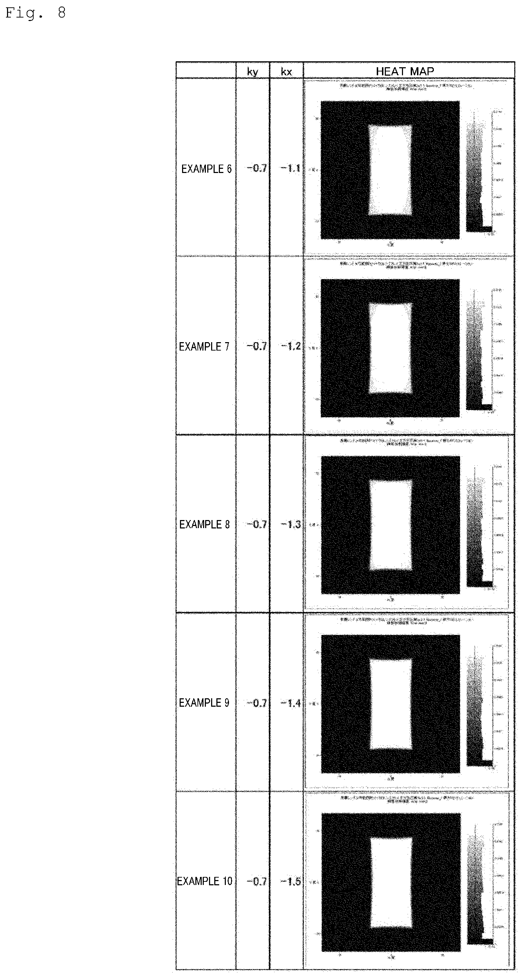

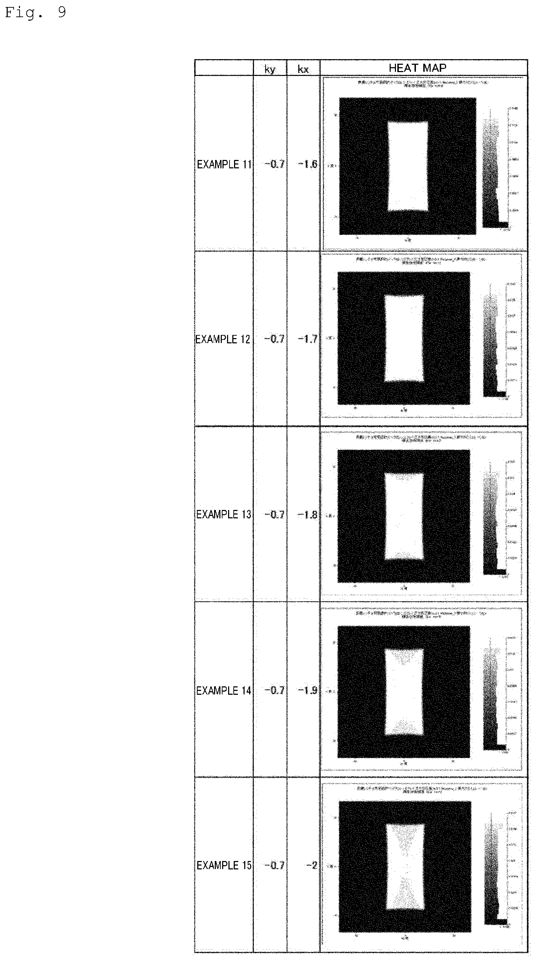

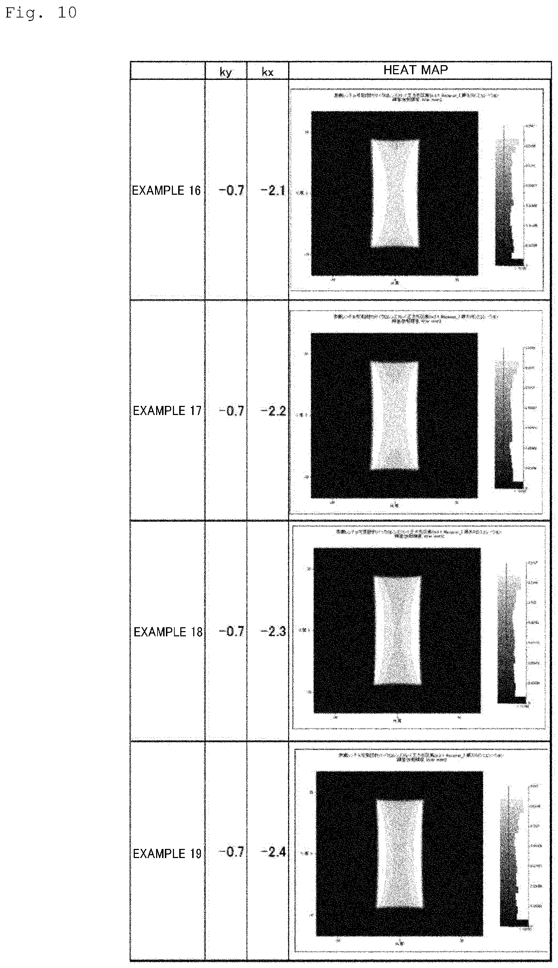

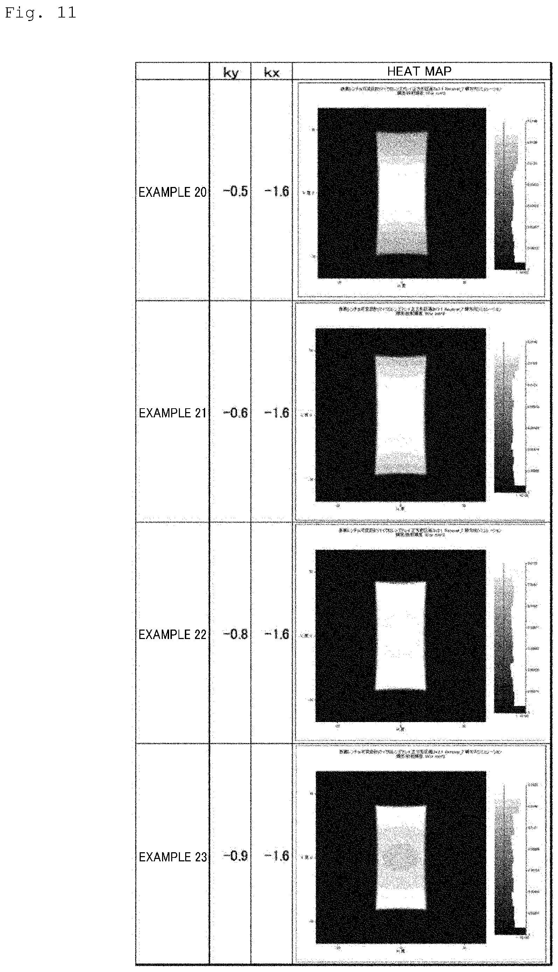

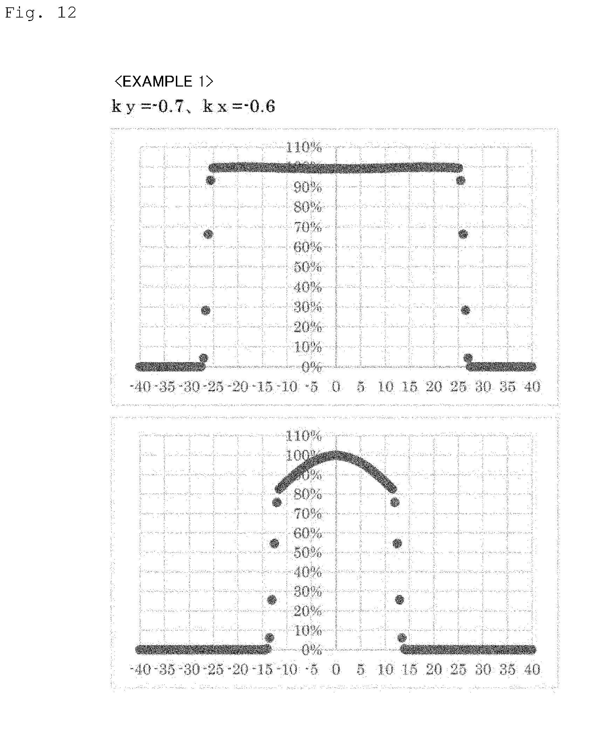

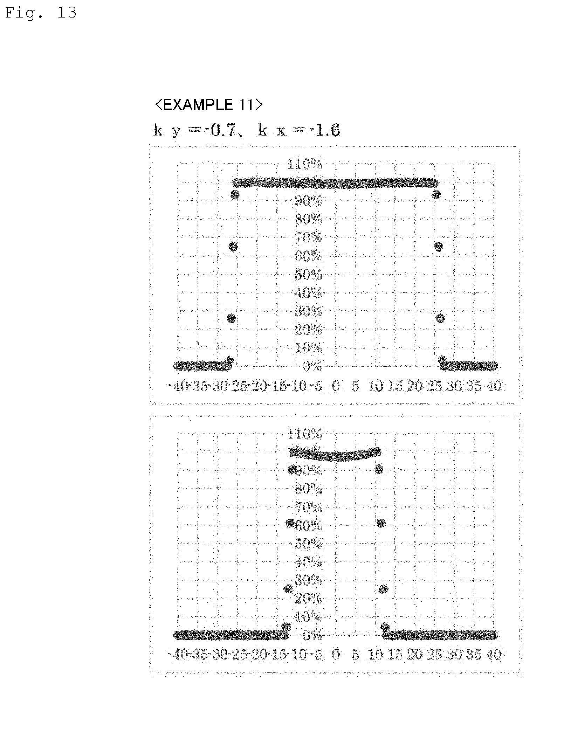

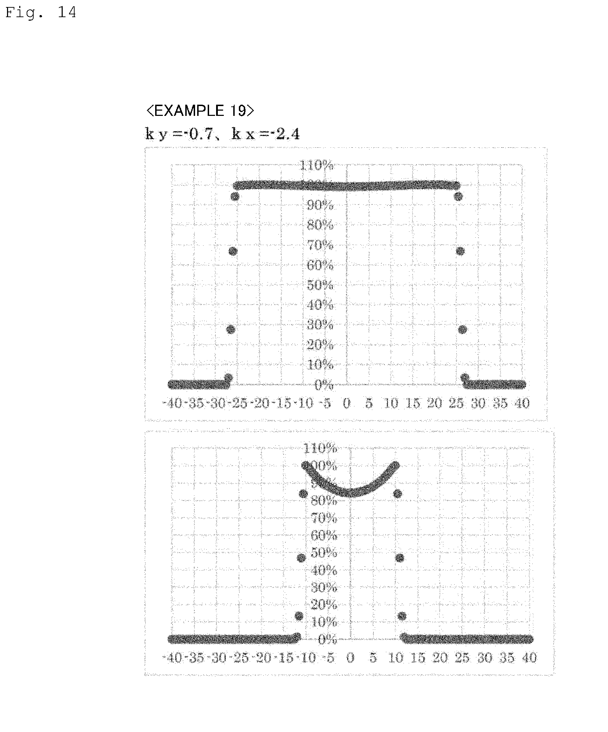

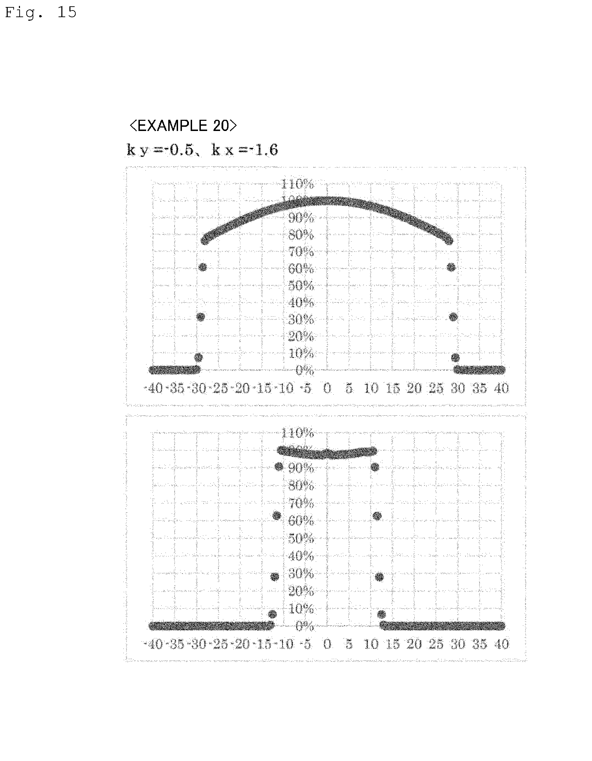

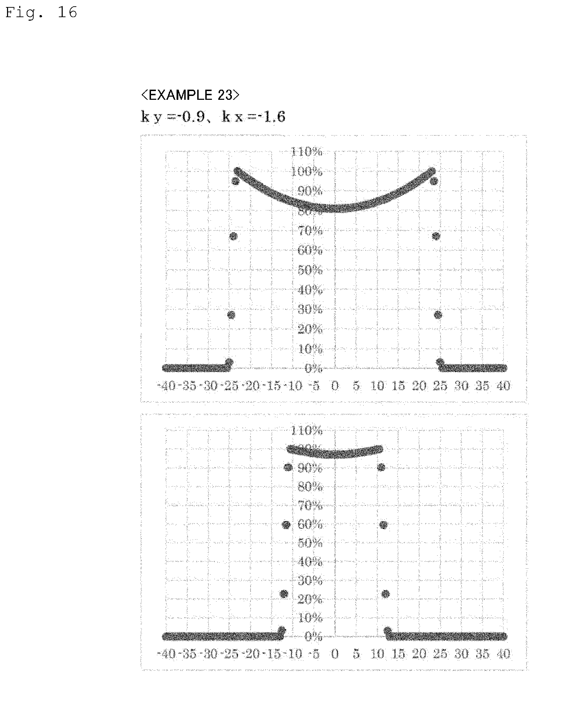

Figs. 7 to 11 show the heat maps, and Figs. 12 to 16 show the graphs.

As shown in Figs. 7 to 16, it has been found that the optical element according to the present invention can realize a luminance equal to or greater than 80% of the maximum luminance in the diffusion angle of 26 degrees in the horizontal direction H and 12 degrees in the vertical direction V.

[Examples 24 to 31 and Comparative Examples 1 and 2]

(Microlens design)

As optical elements of Examples 24 to 31 and Comparative Examples 1 and 2, simulations were conducted for diffusers including a microlens array, in which the first lenticular lens is provided on the first main surface and the second lenticular lens is provided on the second main surface, using LightTools described above with the following design specifications.

<Design specifications>

[Diffuser]

- The refractive index of the diffuser was 1.49, the same as in Examples 1 to 23.
- The thickness of the diffuser was 2 mm in the Z axis direction (surface normal direction), and the sheet size was 50 mm square.
- The curvature cx was 27 mm$^{-1}$, and the curvature cy was 60 mm$^{-1}$.
- The pitch Px of the first lenticular lenses in the X direction was set to $30\pm2$ $\mu$m.
- The pitch Py of the second lenticular lenses in the Y direction was set to $30\pm2$ $\mu$m.
- In Formulas (1) and (2), the conic constant kx was set to kx=-1.6, and the conic constant ky was set to ky=-0.7.
- The deviation angles $\theta$ of the first and second lenticular lenses from the orthogonal direction on the xy plane are as follows.

[Table 2]

| | Deviation angle $\theta$ from orthogonal direction (degrees) | Optimized angle (degrees) |
|---|---|---|
| Example 24 | 0 | 179.1 |
| Example 25 | 10 | 155.83 |
| Example 26 | 20 | 74.51 |
| Example 27 | 30 | 78.21 |
| Example 28 | 40 | 72.15 |
| Example 29 | 50 | 74.02 |
| Example 30 | 60 | 79.07 |
| Example 31 | 70 | 79.26 |
| Comparative Example 1 | 80 | 88.35 |
| Comparative Example 2[1] | 90 | 90 |
| [1] In Comparative Example 2, adjustment of the optimized angle was not performed. | | |

[Light source and light receiver]

Conditions for a light source and a light receiver were as follows.

Light source size: 45 mm square
Light source position: -100 mm behind the seat (-Z direction)

Number of tracking rays: 10,000,000
Fixed light receiver size: 100 mm square
Fixed light receiver position: 3 mm in front of the seat (Z direction)

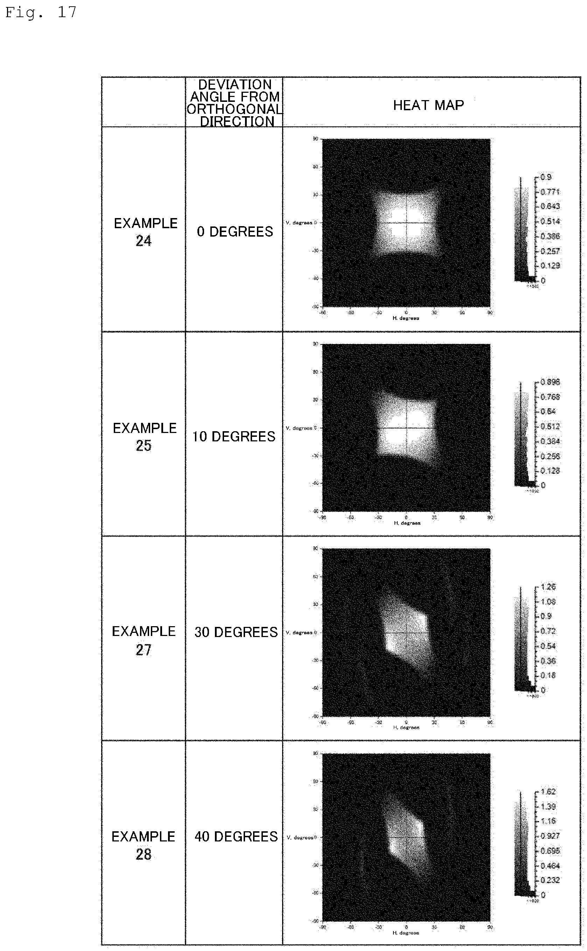

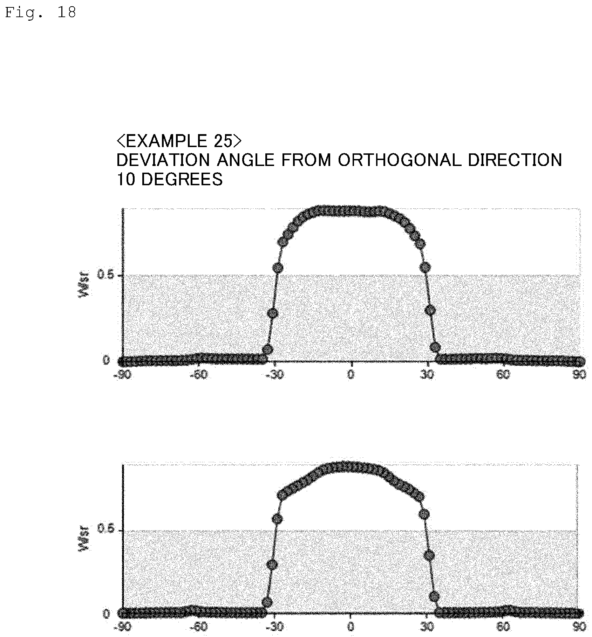

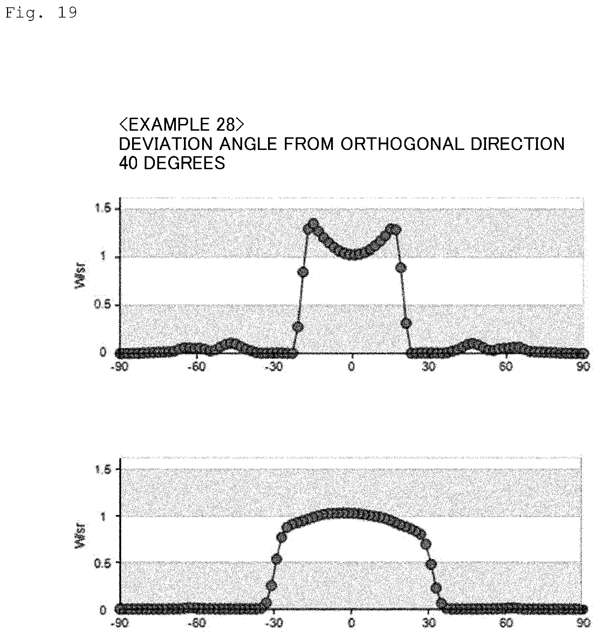

Fig. 17 shows heat maps of the diffusers of Examples 24, 25, 27, and 28 out of Examples 24 to 31, evaluated by the simulations on the basis of the above conditions, Fig. 18 shows a distribution in radiation intensity (W/sr) of diffused light in the diffuser of Example 25, and Fig. 19 shows a distribution in radiation intensity (W/sr) of diffused light in the diffuser of Example 28.

In each of Figs. 18 and 19, an upper graph shows the distribution in radiation intensity (W/sr) of the diffuser in the X axis direction, and a lower graph shows the distribution in radiation intensity (W/sr) of the diffuser in the Y axis direction. From each of Figs. 18 and 19, it can be confirmed that the top-hat type radiation intensity was obtained within a range of the deviation angle of 10 to 40 degrees.

Next, for each of the diffusers of Examples 24 to 31 and Comparative Examples 1 and 2, in order to accommodate changes in the deviation angle θ, optimized angle settings of the angle-adjustable light receiver with the fixed light receiver as a reference were set as shown in Table 2 above.

The optimized angle settings in Table 2 were set so that the above-described angular intensity uniformity (= (minimum value of radiation intensity)/(maximum value of radiation intensity)×100%), which is an index of the angular intensity uniformity, was maximized within the angle range (see (1) to (3) below).

Next, the diffusion shape of the emitted light with respect to the angle-adjustable light receiver adjusted to the optimized angle was set to be rectangular, and the diffusion angle of the emitted light with respect to the normal incident light was set to the following angle ranges (1) to (3) in the horizontal direction H and the vertical direction V.

[Table 3]

|  | Horizontal direction H | Vertical direction V |
|---|---|---|
| Angle range (1) | ± 26 degrees | ± 12 degrees |
| Angle range (2) | ± 15 degrees | ± 9 degrees |
| Angle range (3) | ± 13 degrees | ± 7 degrees |

Also, a starting point serving as a reference for the angle ranges is a point at which a center line of incident light (for example, the normal incident light) intersects the optical element (diffuser).

The angle ranges in Table 3 were set using the optimization function of LightTools with the conditions of the angle range (3) as a reference. The conditions when optimizing were as described below.

Number of rays traced: 100,000
Result output: 2-degree increments
Smoothing: 3 cells
Analysis coordinate system: IES Type B
Light receiver filter: Only those that have passed through the front and back shapes of the diffuser were totalized.

The angular intensity uniformity was calculated under conditions for each of Examples 24 to 31 and Comparative Examples 1 and 2, on the basis of the following formula, and from the maximum and minimum values of radiation intensity (W/sr), on the basis of the following formula.

Angular intensity uniformity=((minimum value of radiation intensity)/(maximum value of radiation intensity))×100%

Also, the minimum and maximum values of radiation intensity were set to the minimum and maximum values of radiation intensity when optimized within the angle ranges (1) to (3).

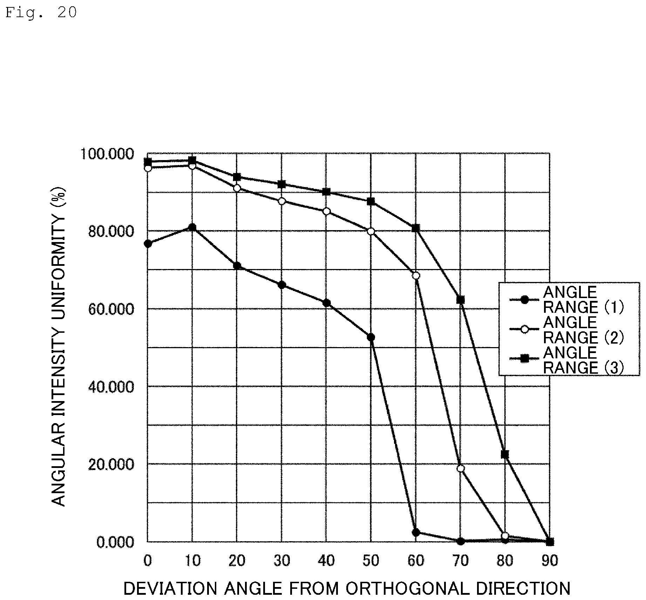

Fig. 20 shows a graph obtained by plotting the results of angular intensity uniformity for each of Examples 24 to 31 and Comparative Examples 1 and 2. The angle ranges (1) to (3) shown in Fig. 20 correspond to each of the angle ranges shown in Table 3. Fig. 20 shows that, in all of the angle ranges (1) to (3), the angular intensity uniformity tends to increase when the deviation angle from the orthogonal direction is less than 70 degrees, and when the deviation angle from the orthogonal direction is 40 degrees or less, the angular intensity uniformity is more significantly improved.

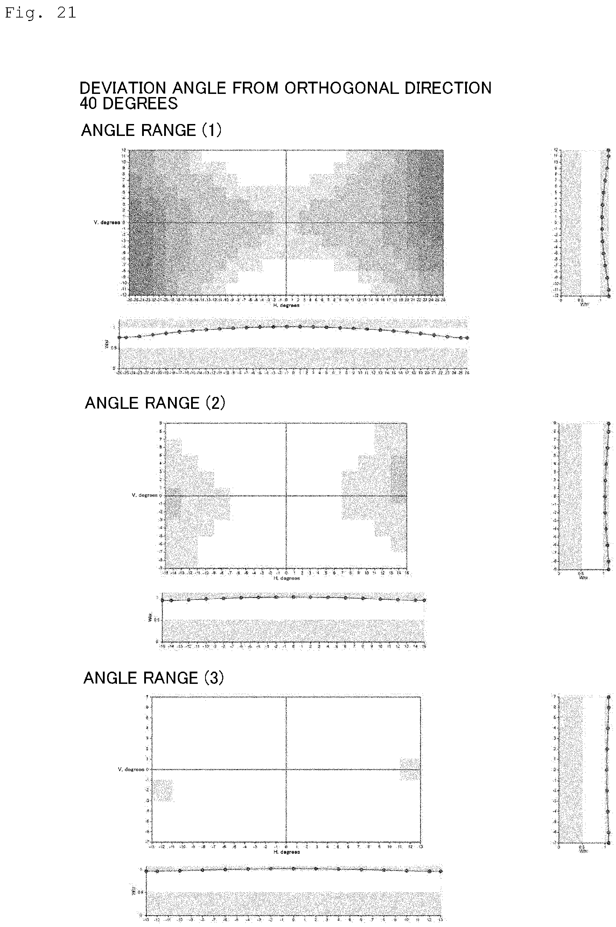

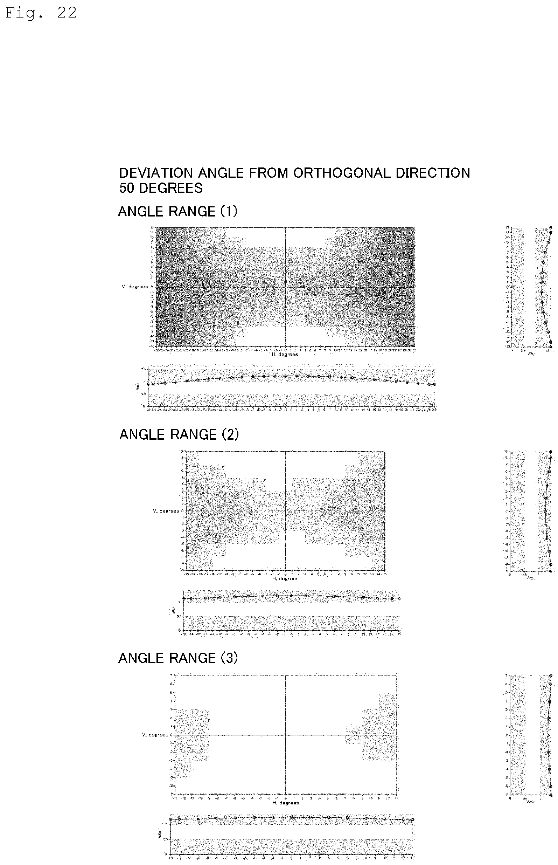

Fig. 21 shows heat maps for each of the angle ranges (1) to (3) for the diffuser of Example 28 (deviation angle of 40 degrees), and Fig. 22 shows heat maps for each of the angle ranges (1) to (3) for the diffuser of Example 29 (deviation angle of 50 degrees). From the heat maps under the angle range conditions shown in Figs. 21 and 22, it can be confirmed that, when the lenticular lens having an deviation angle of 40 degrees from the orthogonal direction rather than 50 degrees tends to result in more uniform radiation intensity and higher luminance.

Reference Signs List

| 10, 10' | Optical element |
|---------|-----------------|
| 10a, 10'a | Microlens |
| 11a | First main surface |
| 11 | First lenticular lens |
| $L_{11}$ | Central axis (first lenticular lens) |
| 12a, 12'a | Second main surface |
| 12 | Second lenticular lens |
| $L_{12}$ | Central axis (second lenticular lens) |
| 100 | Head-up display device |
| 101 | Laser projector |
| 102 | Diffuser (optical element) |
| 103 | Main mirror |
| 104 | Secondary mirror |
| 105 | Transmissive reflector |

**Claims**

1. An optical element comprising a first main surface and a second main surface opposed to each other, wherein

   the first main surface has a first lenticular lens, and
   the second main surface has a second lenticular lens,
   a long axis direction of the first lenticular lens is orthogonal to a long axis direction of the second lenticular lens, or intersects therewith to further form a deviation angle within a range of $\pm 70$ degrees from the orthogonal direction,
   a curved surface shape of the first lenticular lens is expressed by the following Formula (1), and
   [Math. 1]

$$z = f(x) = \frac{c_x * x^2}{1 + \sqrt{1 - (1 + k_x)c_x^2 * x^2}} \quad \text{Formula (1)}$$

   [In Formula (1), cx indicates a curvature [1/mm], and x indicates a distance [mm] from a central axis of the first lenticular lens in an X direction. kx indicates a conic constant and is -2.4 or more and -0.6 or less.]
   a curved surface shape of the second lenticular lens is expressed by the following Formula (2).
   [Math. 2]

$$z = f(y) = \frac{c_y * y^2}{1 + \sqrt{1 - (1 + k_y)c_y^2 * y^2}} \quad \text{Formula (2)}$$

   [In Formula (2), cy indicates a curvature [1/mm], and y indicates a distance [mm] from a central axis of the second lenticular lens in a Y direction. ky indicates a conic constant and is -0.9 or more and -0.5 or less.]

2. The optical element according to claim 1, wherein the kx is -2.0 or more and -1.0 or less.

3. The optical element according to claim 1, wherein the ky is -0.8 or more and -0.6 or less.

4. The optical element according to claim 1, wherein the optical element is made of a resin having a refractive index of 1.35 or more and 1.7 or less.

5. The optical element according to claim 1, wherein the optical element has angular intensity uniformity of 60% or more.

6. The optical element according to claim 1, wherein the optical element has a luminance equal to or greater than 80% of the maximum luminance within an angle range of 90% of the full width at half maximum (FWHM).

7. The optical element according to claim 1, wherein the optical element is a diffuser.

8. The optical element according to claim 1, wherein the curved surface shape of the first lenticular lens is further adjusted in accordance with the following Formula (3).
   [Math. 3]

$$\sum_{n=2}^{10} A_{2n}[(1 - B_{2n})x^2 + (1 + B_{2n})y^2]^n \quad \text{Formula (3)}$$

[In Formula (3), A indicates a symmetric coefficient. B indicates an asymmetric coefficient and is -1.]

9. The optical element according to claim 1, wherein the curved surface shape of the second lenticular lens is further adjusted in accordance with the following Formula (4).
   [Math. 4]

$$\sum_{n=2}^{10} A_{2n}[(1 - B_{2n})x^2 + (1 + B_{2n})y^2]^n \quad \text{Formula (4)}$$

[In Formula (4), A indicates a symmetric coefficient. B indicates an asymmetric coefficient and is 1.]

10. The optical element according to claim 7, wherein the diffuser is used in a head-up display device.

11. The optical element according to claim 10, wherein an image forming device in the head-up display device is a laser projector that uses laser light as a light source.

12. The optical element according to any one of claims 1 to 11, wherein the optical element is used within a range of a diffusion angle of light incident on the first main surface and emitted from the second main surface including 0 to 26 degrees in a horizontal direction H and 0 to 12 degrees in a vertical direction V.

Fig. 1

Fig. 2

Fig. 3

Fig. 4

Fig. 5

EP 4 760 361 A1

Fig. 6

20

Fig. 7

| | ky | kx | HEAT MAP |
|---|---|---|---|
| EXAMPLE 1 | -0.7 | -0.6 | |
| EXAMPLE 2 | -0.7 | -0.7 | |
| EXAMPLE 3 | -0.7 | -0.8 | |
| EXAMPLE 4 | -0.7 | -0.9 | |
| EXAMPLE 5 | -0.7 | -1 | |

Fig. 8

| | ky | kx | HEAT MAP |
|---|---|---|---|
| EXAMPLE 6 | −0.7 | −1.1 | |
| EXAMPLE 7 | −0.7 | −1.2 | |
| EXAMPLE 8 | −0.7 | −1.3 | |
| EXAMPLE 9 | −0.7 | −1.4 | |
| EXAMPLE 10 | −0.7 | −1.5 | |

Fig. 9

| | ky | kx | HEAT MAP |
|---|---|---|---|
| EXAMPLE 11 | −0.7 | −1.6 | |
| EXAMPLE 12 | −0.7 | −1.7 | |
| EXAMPLE 13 | −0.7 | −1.8 | |
| EXAMPLE 14 | −0.7 | −1.9 | |
| EXAMPLE 15 | −0.7 | −2 | |

Fig. 10

| | ky | kx | HEAT MAP |
|---|---|---|---|
| EXAMPLE 16 | −0.7 | −2.1 | |
| EXAMPLE 17 | −0.7 | −2.2 | |
| EXAMPLE 18 | −0.7 | −2.3 | |
| EXAMPLE 19 | −0.7 | −2.4 | |

Fig. 11

| | ky | kx | HEAT MAP |
|---|---|---|---|
| EXAMPLE 20 | −0.5 | −1.6 | |
| EXAMPLE 21 | −0.6 | −1.6 | |
| EXAMPLE 22 | −0.8 | −1.6 | |
| EXAMPLE 23 | −0.9 | −1.6 | |

Fig. 12

<EXAMPLE 1>
k y =-0.7、 k x =-0.6

Fig. 13

<EXAMPLE 11>

k y = -0.7、 k x = -1.6

Fig. 14

<EXAMPLE 19>
$k_y = -0.7$、 $k_x = -2.4$

Fig. 15

<EXAMPLE 20>

k y =-0.5、 k x =-1.6

Fig. 16

<EXAMPLE 23>
k y =‑0.9、 k x =‑1.6

Fig. 17

| | DEVIATION ANGLE FROM ORTHOGONAL DIRECTION | HEAT MAP |
|---|---|---|
| EXAMPLE 24 | 0 DEGREES | |
| EXAMPLE 25 | 10 DEGREES | |
| EXAMPLE 27 | 30 DEGREES | |
| EXAMPLE 28 | 40 DEGREES | |

Fig. 18

<EXAMPLE 25>
DEVIATION ANGLE FROM ORTHOGONAL DIRECTION
10 DEGREES

Fig. 19

<EXAMPLE 28>
DEVIATION ANGLE FROM ORTHOGONAL DIRECTION
40 DEGREES

Fig. 20

Fig. 21

DEVIATION ANGLE FROM ORTHOGONAL DIRECTION
40 DEGREES

ANGLE RANGE (1)

ANGLE RANGE (2)

ANGLE RANGE (3)

Fig. 22

DEVIATION ANGLE FROM ORTHOGONAL DIRECTION
50 DEGREES

ANGLE RANGE (1)

ANGLE RANGE (2)

ANGLE RANGE (3)

EP 4 760 361 A1

## INTERNATIONAL SEARCH REPORT

International application No.

**PCT/JP2024/028405**

### A. CLASSIFICATION OF SUBJECT MATTER

*G02B 3/06*(2006.01)i; *G02B 3/00*(2006.01)i; *G02B 26/10*(2006.01)i; *G02B 27/01*(2006.01)i
FI: G02B3/06; G02B27/01; G02B3/00 A; G02B26/10 C

According to International Patent Classification (IPC) or to both national classification and IPC

### B. FIELDS SEARCHED

Minimum documentation searched (classification system followed by classification symbols)

G02B3/06; G02B3/00; G02B21/14;G02B26/10; G02B27/01

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2009-025774 A (TOPPAN PRINTING CO., LTD.) 05 February 2009 (2009-02-05) paragraphs [0024], [0034], [0100], [0103], fig. 1(c) | 1-12 |
| Y | WO 2019/182073 A1 (AGC INC.) 26 September 2019 (2019-09-26) paragraphs [0057]-[0061] | 1-12 |
| A | WO 2006/036032 A1 (SONY CORPORATION) 06 April 2006 (2006-04-06) | 1-12 |
| A | JP 2006-113371 A (SEIKO EPSON CORPORATION) 27 April 2006 (2006-04-27) | 1-12 |
| A | WO 2011/016457 A1 (SUMITOMO CHEMICAL COMPANY, LIMITED) 10 February 2011 (2011-02-10) | 1-12 |

☐ Further documents are listed in the continuation of Box C.     ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 October 2024** | **22 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/028405**

| Patent document cited in search report | | | Publication date (day/month/year) | Patent family member(s) | | | Publication date (day/month/year) |
|---|---|---|---|---|---|---|---|
| JP | 2009-025774 | A | 05 February 2009 | (Family: none) | | | |
| WO | 2019/182073 | A1 | 26 September 2019 | US | 2021/0003911 | A1 | |
| | | | | paragraphs [0097]-[0100] | | | |
| WO | 2006/036032 | A1 | 06 April 2006 | US | 2007/0242478 | A1 | |
| | | | | EP | 1795923 | A1 | |
| | | | | CN | 1947034 | A | |
| | | | | KR | 10-2007-0061478 | A | |
| | | | | TW | 200632466 | A | |
| JP | 2006-113371 | A | 27 April 2006 | US | 2006/0082692 | A1 | |
| | | | | KR | 10-2006-0053283 | A | |
| | | | | CN | 1760716 | A | |
| | | | | TW | 200615606 | A | |
| WO | 2011/016457 | A1 | 10 February 2011 | TW | 201128233 | A | |

Form PCT/ISA/210 (patent family annex) (July 2022)

**REFERENCES CITED IN THE DESCRIPTION**

**Patent documents cited in the description**

- JP 2010145745 A

- WO 2023053643 A